# EUROPÄISCHE PATENTSCHRIFT

(11) **EP 0 606 582 B1**
(45) Veröffentlichungstag und Bekanntmachung des Hinweises auf die Patenterteilung: **26.05.1999**
(21) Anmeldenummer: 93119542.4
(22) Anmeldetag: 03.12.1993
(51) Int. Cl.: H04Q 11/04, H04Q 3/545

(54) **Zentralgesteuerte digitale Zeitmultiplex-Fernsprechvermittlungsanlage**
Centrally controlled digital time division multiplex telephone exchange
Central téléphonique à multiplexage temporel numérique à commande centrale

(30) Priorität: 22.12.1992 DE 4243636
(43) Veröffentlichungstag der Anmeldung: 20.07.1994
(73) Patentinhaber: SIEMENS AKTIENGESELLSCHAFT, 80333 München (DE)
(72) Erfinder: Nagler, Werner, Dipl.-Ing., D-82069 Hohenschäftlarn (DE); Glöss, Bernhard, Dipl.-Ing., D-81735 München (DE)

(56) Entgegenhaltungen:
- EP-A- 0 360 065
- EP-A- 0 360 924
- EP-A- 0 387 667

## Beschreibung

Die Erfindung betrifft eine zentralgesteuerte digitale Zeitmultiplex-Fernsprechvermittlungsanlage gemäß dem Oberbegriff des Patentanspruchs 1.

Bei einer Vermittlungsanlage dieser Art sind dem Anschluß von Verbindungs- und/oder Teilnehmeranschlußleitungen dienende Anschlußgruppen einander paarweise zugeordnet. Durch entsprechende Umschalteeinrichtungen ist es dabei möglich, außer einem Normalbetrieb einen Sonderbetrieb durchzuführen. Im Normalbetrieb wird über eine Anschlußgruppe nur der mit den an sie angeschlossenen Leitungen in Zusammenhang stehende Verkehr abgewickelt. Im Sonderbetrieb hingegen, der dann in Frage kommt, wenn zentrale Teile der Partner-Anschlußgruppe eines Paars von Anschlußgruppen ausgefallen sind, werden die dezentralen Steuerungen sowie das Gruppenkoppelfeld der jeweils anderen Anschlußgruppe des Paares zur Abwicklung auch des Verbindungsverkehrs herangezogen, der mit den Leitungen in Zusammenhang steht, die an die Partner-Anschlußgruppe mit den ausgefallenen zentralen Teilen in Zusammenhang steht.

Damit die Gruppenkoppler der Anschlußgruppen, bei denen es sich um reine Zeitstufen handelt, die zusätzlichen Aufgaben im Sonderbetrieb erfüllen können, ist ihr Zeitstufenspeicher für die doppelte Anzahl von Leitungsanschlüssen ausgelegt.

Die Anschlußgruppen des Fernmeldevermittlungssystems in der vorausgesetzten Struktur weisen außer den dem eigentlichen Leitungsanschluß dienende Anschlußeinheiten, dem erwähnten Gruppenkoppler und einem Gruppensteuerwerk auch eine Mehrzahl von Funktionseinheiten auf, die verbindungsindividuell belegbar sind und zu denen beispielsweise eine Funktionseinheit zum Wahlkennzeichenempfang und eine Funktionseinheit zur Tonzeichengabe gehören.

Die Anschaltung dieser verbindungsindividuellen Einheiten erfolgt über den Gruppenkoppler der Anschlußgruppe. Bei Ausfall des Gruppenkopplers stehen also auch diese verbindungsindividuellen Funktionseinheiten den an diese Anschlußgruppe angeschlossenen Leitungen nicht mehr zur Verfügung.

Aus Aufwandsgründen kommt eine Doppelung, wie sie für die Sprachspeicher der Gruppenkoppler im Hinblick auf die Abwicklung des Sonderbetriebs vorgesehen ist, für diese verbindungsindividuellen Funktionseinheiten nicht in Frage.

Es ist daher eine Anschlußgruppenstruktur für eine solche Vermittlungsanlage angegeben worden (europäische Patentanmeldung 0 387 667 A2), bei der die Zeitstufenspeicher der Gruppenkoppler der Paare bildenden Anschlußgruppen nicht nur doppelt im Hinblick auf die Anschlußmöglichkeit und die Abwicklung auch des Fernsprechverkehrs der jeweiligen Partneranschlußgruppe, sondern im Hinblick auf die Mitausnutzung der erwähnten verbindungsindividuellen Funktionseinheiten einer nicht von einem Ausfall betroffenen Anschlußgruppe für an die Partneranschlußgruppe angeschlossene Leitungen betreffende Verbindungen vierfach vorgesehen ist. Die Anschaltung ist hierbei derart, daß diese Zeitstufenspeicher ein erstes Paar bilden, das eingangsseitig sowohl die an die betreffende Anschlußgruppe angeschlossenen Leitungen als auch den an die Partneranschlußgruppe angeschlossenen Leitungen sowie den zu der betreffenden Anschlußgruppe gehörenden verbindungsindividuellen Funktionseinheiten zugänglich ist. Ein zweites Paar von Zeitstufenspeichern ist eingangsseitig nur den an die Partneranschlußgruppe angeschlossenen Leitungen zugänglich.

Ausgangsseitig können von dem einen Teil dieser Paare sowohl eine an die Anschlußgruppe angeschlossene Leitung bzw. eine zu dem zentralen Koppelfeld führende Zwischenleitung als auch die verbindungsindividuellen Funktionseinheiten erreicht werden, wogegen von dem anderen Teil des Paares lediglich ein an die Partneranschlußgruppe angeschlossene Leitung bzw. eine von dem zentralen Koppelfeld zu dieser Partneranschlußgruppe führende Zwischenleitung erreicht werden können.

Auf diese Weise ist eine freizügige Zuteilung der verbindungsindividuellen, zu einer Anschlußgruppe gehörenden Funktionseinheiten zu an diese Anschlußgruppeangeschlossene Leitungen als auch zu an die Partneranschlußgruppe angeschlossene Leitungen möglich.

Wenn auch der durch die Vervierfachung des Zeitstufen-speichers bedingte Mehraufwand gegenüber der vorstehend angedeuteten Verdoppelung der Funktionseinheiten aufwandsmäßig günstiger ist, stellt dieses Konzept insgesamt doch keine vollständig zufriedenstellende Lösung dar.

Die Aufgabe der vorliegenden Erfindung besteht daher darin, ein Aufbau- und Funktionskonzept für eine Vermittlungsanlage mit paarweise einander zugeordneten Teilnehmer-/ oder Anschlußleitungsanschlußgruppen anzugeben, das auf günstigere Art und Weise im Sonderbetrieb der Anschlußgruppen die Möglichkeit der Zuteilung von verbindungsindividuellen Funktionseinheiten zu an die jeweilige Partneranschlußgruppe angeschlossenen Leitungen gewährleistet.

Diese Aufgabe wird durch die im Kennzeichen des Patentanspruches 1 angegebenen Merkmale gelöst.

Demnach bildet ein der Eigenteil-Zwischenspeicherung für die von den an die eigene Anschlußgruppe angeschlossenen Leitungen kommenden Fernmeldeinformationen, und ein Partnerteil-Zwischenspeicher für die von der an die Partner-Anschlußgruppe angeschlossenen Leitungen kommenden Fernsprechinformationen eine einzige Baueinheit. Zu ihrer Schreib- und Leseansteuerung ist diese Baueinheit mit Bestandteilen des Gruppenkopplers verbunden, die von einem Systemtakt, dessen Frequenz für die Behandlung nur des eigenen Fernsprechanteils ausreichen würde, einen Takt doppelter Frequenz ableiten, bei dem jeweils Paare von aufeinanderfolgenden Taktimpulsen abwechselnd die Schreib- und die Leseansteuerung des EigenteilZwischenspeichers bzw. des Partnerteil-Zwischenspeichers veranlassen.

Abgesehen von der Reduzierung des Speicherplatzbedarfs gegenüber der vorerwähnten "Vierfach"Vierfach-Speicher"-Version ist das erfindungsgemäße Konzept, bei dem sich der Speicher auf einem einzigen Chip realisieren läßt, auch bezüglich Platzbedarf und Verlustleistung günstiger.

Gemäß einer weiteren Ausgestaltung der Erfindung erfolgt die Ableitung der Schreib- und Lese-Taktimpulse mit Hilfe einer Schaltungsanordnung, die aus einer Verzögerungsleitung, der der Systemtakt als Eigengröße zugeführt wird, und an deren Ausgängen mehrere jeweils um einen festen Raster zeitversetzte Taktsignale abnehmbar sind, sowie aus einem programmierbaren logischen Feld, dem diese Taktsignale zugeführt werden, und dessen zwei Ausgänge die Schreib- bzw. Lesesignale in der gewünschten Folge und Frequenz liefern.

Auch dies stellt eine technologisch günstige Lösung dar.

Nachstehend wird die Erfindung anhand eines Ausführungsbeispiels unter Bezugnahme auf eine Zeichnung näher erläutert.

In der Zeichnung zeigen:
Figur 1 das Blockschaltbild des erfindungsgemäß betriebenen Gruppenkopplers der Anschlußgruppe einer digitalen Fernsprechvermittlungsanlage,
Figur 2 ein die Ansteuertaktverhältnisse wiedergebendes Zeitdiagramm,
Figur 3 das Blockschaltbild einer solchen Vermittlungsanlage, deren Betandteil der Gruppenkoppler gemäß Figur 1 ist.

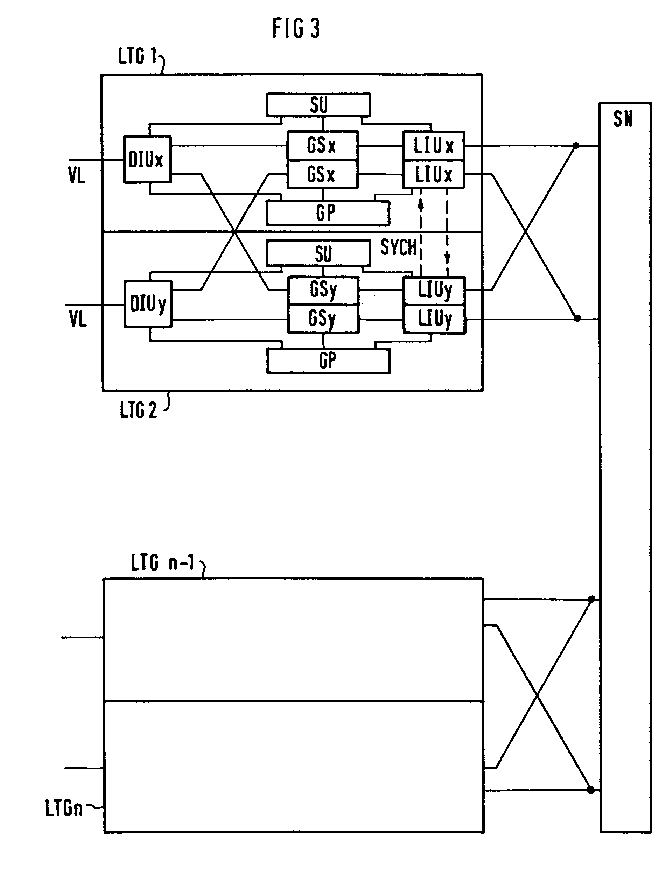

Es wird zunächst auf die Figur 3 eingegangen.

Sie zeigt eine digitale Fernsprechvermittlungsstelle derjenigen Art, auf die die Erfindung Bezug nimmt. Es sind dabei drei Hauptbestandteile einer solchen Vermittlungsanlage dargestellt, nämlich der Peripheriebereich mit Teilnehmeranschlußgruppen LTG1 bis LTGn für den Anschluß von Leitungen, im dargestellten Fall Verbindungsleitungen VL. Ferner ein zentrales Koppelfeld SN, an das die Anschlußgruppen angeschlossen sind. Ein hier nicht dargestellter Koordinationsprozessor nimmt globale Steuerungsaufgaben, u. a. auch die Steuerung des zentralen Koppelfeldes SN, wahr.

Wesentliche Bestandteile der Anschlußgruppen LTG sind ein Gruppenkoppler GS, koppelfeldseitige Schnittstelleneinheiten LIU, leitungsseitige Schnittstellen DIU, ein Gruppensteuerwerk GP, sowie eine Signalisierungseinheit SU.

Bei dieser Darstellung ist nicht berücksichtigt, daß normalerweise die Leitungen nicht direkt an die Anschlußgruppen angeschlossen sind, sondern über eine weitere, ggf. von der Vermittlungsstelle abgesetzte Einheit, in der eine Leitungskonzentration stattfindet.

Am Beispiel der Anschlußgruppen LTG1 und LTG2 und der Anschlußgruppen LTGn-1 und LTGn zeigt die FIG 3, daß die Anschlußgruppen dieser Fernsprechvermittlungsanlage jeweils paarweise einander zugeordnet sind. Die Zuordnung ist derart, daß dann, wenn zentrale Teile einer Anschlußgruppe, also deren Gruppenprozessor GP und/oder deren Gruppenkoppler GS ausfallen, Verbindungen, die mit an die betreffende Anschlußgruppe angeschlossenen Leitungen in Zusammenhang stehen, unter Ausnutzung der entsprechenden zentralen Teile der jeweiligen Partner-Anschlußgruppe abgewickelt werden können. Dementsprechend sind außer den internen Verbindungen zwischen den leitungsseitigen Schnittstellen DIU und dem jeweiligen Gruppenkoppler GS Leitungsverbindungen zwischen diesen Schnittstellen und dem Gruppenkoppler der jeweiligen Partner-Anschlußgruppe gezeigt, wie auch außer den Leitungsverbindungen zwischen den koppelfeldseitigen Schnittstellen LIU und den den Anschlußgruppen zugeordneten Koppelfeldeingängen des zentralen Koppelfeldes SN Leitungsverbindungen zwischen diesen Koppelfeldeingängen und der koppelfeldseitigen Schnittstelle LIU der jeweiligen Partner-Anschlußgruppe gezeigt sind.

In der FIG 3 ist auch angedeutet, daß die Gruppenkoppler GS, bei denen es sich um Zeitstufen handelt, im Hinblick auf die Mitübernahme des Fernsprechverkehrs, der mit den an die Partner-Anschlußgruppe angeschlossenen Leitungen in Zusammenhang steht, einen Zeitstufenspeicher doppelter Kapazität aufweisen.

Zu der schon erwähnten Signalisierungseinheit SU, gehören im wesentlichen ein Tongenerator zur Erzeugung vermittlungstechnischer Hörtöne, Baugruppen mit Codeempfängern, sowie Baugruppen zur Erzeugung der Rufspannung und zur Erzeugung der Zählspannung. Bei diesen Baugruppen handelt es sich um verbindungsindividuell genutzte Anschlußgruppenbestandteile, die über den Gruppenkoppler im Bedarfsfall den angeschlossenen Verbindungsleitungen zur Verfügung gestellt werden.

Auch die Signalisierungseinheit SU wird im Falle eines Sonderbetriebs in Zusammenhang mit dem Fernsprechbetrieb der an die Partner-Anschlußgruppe angeschlossenen Leitungen mit ausgenutzt, weswegen der Gruppenkoppler, wie eingangs dargelegt, so ausgestaltet sein muß, daß über ihn auch eine Verbindung mit den an die Partner-Anschlußgruppe angeschlossenen Leitungen möglich ist.

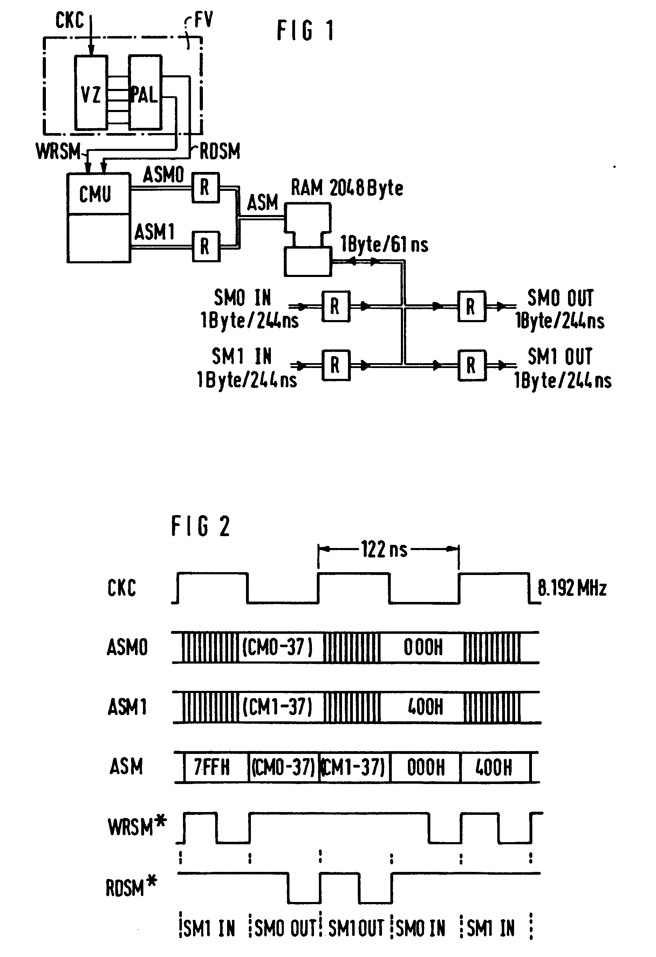

In der FIG 1, die die hier interessierenden Teile des Gruppenkopplers einer Anschlußgruppe LTG zeigt, ist der Zeitstufenspeicher eines solchen Gruppenkopplers mit RAM bezeichnet. Er ist entsprechend der Darstellung in FIG 3 über eine Multiplexleitung SMO IN von der hier nicht dargestellten leitungsseitigen Schnittstelle DIU der eigenen Anschlußgruppe, der er angehört, sowie über eine Multiplexleitung SM1 IN von der leitungsseitigen Schnittstelleneinheit DIU aus, die der Partneranschlußgruppe angehört, zugänglich. Aus dem Zeitstufenspeicher ausgelesene Informationen gelangen über eine Multiplexleitung SMO OUT an die der Anschlußgruppe zugeordneten Eingänge des Koppelfeldes SN, wogegen sie über eine Multiplexleitung SM1 OUT an die der Partner-Anschlußgruppe zugeordneten Koppelfeldeingänge gelangen können.

Auf den erwähnten Multiplexleitungen, auf denen jeweils 8 Bit parallel übertragen werden, erfolgt die Informationsübertragung mit einer Byterate von 4,096 MByts/s. Der Zeitstufenspeicher RAM ist so ausgelegt, daß er sowohl die auf den an die eigene Anschlußgruppe angeschlossenen Leitungen als auch die auf den an die Partner-Anschlußgruppe angeschlossenen Leitungen innerhalb von 2 Pulsrahmen angelieferten Informationen speichern kann.

Die Erweitertung der Aufnahmekapazität für den Informationsinhalt zweier Pulsrahmen hat nichts mit der der Erfindung zugrundeliegenden Problematik zu tun, sie steht vielmehr im Zusammenhang mit Problemen, die sich bei Verbindungen, für die mehr als ein Zeitkanal in Anspruch genommen werden (Mehrkanalverbindungen), dadurch ergeben könnten, daß die ursprüngliche Reihenfolge der für eine Verbindung in Anspruch genommenen Kanäle verloren geht.

Der Zeitstufenspeicher weist demnach im vorliegenden Fall eine Speicherkapazität von 2048 Byte auf, von denen die einen von der Multiplexleitung SMO IN und die anderen von der Multiplexleitung SM1 IN aus beschrieben werden.

Die Ansteuerung des Zeitstufenspeicher RAM erfolgt durch einen Haltespeicher CMU, der nacheienander Schreib-/Lese-ansteueradressen ASMO zur Ansteuerung der der Multiplexleitung SMO IN zugeordneten Speicherzellen und Schreib-Lesesteueradressen ASM1 zur Ansteuerung der der Zeitmultiplexleitung SM1 IN zugeordneten Speicherzellen des Zeitstufenspeichers RAM jeweils nach Zwischenspeicherung in einem Zwischenspeicher R liefert.

Diese Lieferung von Schreib- und Lese-Ansteueradressen durch den Haltespeicher CMU erfolgt aufgrund dessen Ansteuerung durch einen Schreib-Takt WRSM bzw. einen Lese-Takt RDSM, die von dem Systemtakt T abgeleitet werden, der hier eine Frequenz von 8,192 MHz aufweist. Die Frequenz des Systemtakts würde nur für die Behandlung des eigenen Fernsprechverkehrs einer Anschlußgruppe ausreichen.

Es ist daher eine Frequenzvervielfacheranordnung FV vorgesehen. Sie enthält eine Verzögerungsleitung VZ, der der Systemtakt T zugeführt wird, und die an einer Reihe von Ausgängen um einen festen Raster zeitversetzte Taktsignale abgibt. Diese Taktsignale werden einem programmierbaren logischen Feld PAL zugeführt, das weiterer Bestandteil des Frequenzvervielfachers FV ist. Dieses programmierbare logische Feld PAL liefert die erwähnten Schreib- und Lesetakte WRSM bzw. RDSM.

Die entsprechenden Zeitverhältnisse zeigt Figur 2. Innerhalb der Taktperioden des Systemtakts CKC, die 122 ns betragen, werden jeweils abwechselnd zwei Schreibsteueradressen und dann zwei Lesesteueradressen an den Zeitstufenspeicher RAM geliefert, so daß innerhalb jeder Taktzeitspanne des Systemtakts CKC zwei Schreibzeitspannen, siehe Zeile WRSM, oder zwei Lesezeitspannen, siehe Zeile RDSM, liegen.

Die Zeile ASM zeigt als Beispiel die Aufeinanderfolge einer Leseadresse CM0-37, die den dem Zeitkanal 37 zugeordneten Speicherplatz des Teils des Zeitstufen-Speichers betrifft, der der Multiplexleitung SMO zugeordnet ist, und die entsprechende Leseadresse CM1-37 für den Teil des Zeitstufenspeichers, der der Multiplexleitung SM1 zugeordnet ist, sowie die Schreibadresse für den ersten Speicherplatz 0 (000 H) in der SM0-Hälfte und die Schreibadresse für den ersten Speicherplatz 1024 (400 H) in der SM1-Hälfte des Zeitstufenspeichers RAM.

Mit Hilfe des erfindungsgemäß aufgebauten und betriebenen Zeitstufenspeichers besteht, wie gewünscht, die Möglichkeit einer freizügigen Zuordnung der einer Anschlußgruppe zugehörigen Einheiten der Signalisierungseinheit SU sowohl zu den an die Anschlußgruppe angeschlossenen Leitungen als auch in einem Sonderbetrieb zu den an die Partner-Anschlußgruppe angeschlossenen Leitungen.

## Patentansprüche

1. Zentralgesteuerte digitale Zeitmultiplex-Fernsprechvermittlungsanlage mit einem zentralen Koppelfeld (SN), einem unter anderem dessen Steuerung dienenden zentralen Koordinationsprozessor, sowie einer Anzahl dezentraler Anschlußgruppen (LTG) zum Anschluß von Verbindungs- und/oder Teilnehmeranschlußleitungen, die jeweils eine mit dem Koordinationsprozessor korrespondierende dezentrale Steuereinrichtung (GP), sowie ein als Zeitstufe arbeitendes Gruppenkoppelfeld (GS) aufweisen, wobei die Anschlußgruppen einander paarweise in der Art zugeordnet sind, daß abweichend von einem Normalbetrieb, in dem über jede Anschlußgruppe nur der mit den an sie angeschlossenen Verbindungs- und/oder Teilnehmerleitungen in Zusammenhang stehende Eigen-Fernsprechverkehr abgewickelt wird, in einem Sonderbetrieb die dezentrale Steuerung (GP) sowie das Gruppenkoppelfeld (GS) für die Abwicklung des mit den an die jeweilige Partner-Anschlußgruppe angeschlossenen Verbindungs- und/oder Teilnehmeranschlußleitungen in Zusammenhang stehenden Partner-Fernsprechverkehrs mit ausgenutzt werden, wozu der Zeitstufenspeicher des Gruppenkoppelfeldes (GS) für die doppelte Anzahl von Leitungsanschlüssen ausgelegt ist,
**dadurch gekennzeichnet**,
daß bei den Gruppenkoppelfeldern ein Eigenteil-Zwischenspeicher für die von den an die eigene Anschlußgruppe angeschlossenen Verbindungs- und/oder Teilnehmeranschlußleitungen (VL) kommenden Fernmeldeinformationen und ein Partnerteilzwischenspeicher für die von den an die Partner-Anschlußgruppe angeschlossenen Leitungen (VL) kommenden Fernsprechinformationen eine einzige Baueinheit (RAM) bilden, die zu ihrer Schreib- und Leseansteuerung mit den Bestandteilen des Gruppenkoppelfeldes verbunden ist, die dazu dienen, aus einem Systemtakt (CKC), dessen Frequenz für die Behandlung nur des Eigen-Fernsprechverkehrs ausreichen würde, ein Takt doppelter Frequenz abzuleiten, bei dem jeweils Paare von Taktimpulsen abwechselnd die Schreib- und die Leseansteuerung des Eigenteil-Zwischenspeichers bzw. des Partnerteil-Zwischenspeichers veranlassen.

2. Vermittlungsanlage nach Anspruch 1,
**dadurch gekennzeichnet**,
daß als Bestandteile zur Ableitung von Schreib- und Lesetakten vom Systemtakt eine Schaltungsanordnung (FV) verwendet wird, die aus einer Verzögerungsleitung (VZ), der der Systemtakt (CKC) als Eingangsgröße zugeführt wird, und anderen Ausgängen jeweils mehrere um einen festen Raster zeitversetzte Taktsignale abnehmbar sind, sowie aus einem programmierbaren logischen Feld (PAL) besteht, dem diese Taktsignale zugeführt werden und dessen zwei Ausgänge die Schreibtaktsignale (WRSM) bzw. die Lesetaktsignale (RDSM) liefern.

## Claims

1. Centrally controlled digital time division multiplex telephone exchange having a central switching network (SN), a central coordination processor which is used, inter alia, to control the central switching network (SN), as well as a number of decentral line trunk groups (LTG) for connection of connecting and/or subscriber access lines, which each have a decentral control device (GP), which corresponds to the coordination processor, and a group switching network (GS) which operates as a timing stage, in which case the line trunk groups are associated with one another in pairs in such a manner that, in contrast to normal operation, in which only the in-house telephone traffic which is related to the connecting and/or subscriber lines connected to the respective line trunk group is handled via each line trunk group, the decentral controller (GP) as well as the group switching network (GS) are also used in a special mode to handle the partner telephone traffic which is related to the connecting and/or subscriber access lines connected to the respective partner line trunk group, for which purpose the timing stage memory of the group switching network (GS) is designed for twice the number of line connections,
characterized in that, in the group switching networks, an in-house section buffer store for the telecommunications information coming from the connecting and/or subscriber access lines (VL) connected to their own line trunk group, and a partner section buffer store for the telecommunications information coming from the lines (VL) which are connected to the partner line trunk group form a single unit (RAM) which is connected, in order to control writing to it and reading from it, to the components of the group switching network, which are used to derive a clock at twice the frequency from a system clock (CKC) whose frequency could be sufficient to handle only the in-house telephone traffic, and in the case of which clock at twice the frequency pairs of clock pulses are in each case used alternately to control the writing to and reading from the in-house section buffer store and the partner section buffer store.

2. Exchange according to Claim 1,
characterized
in that a circuit arrangement (FV) is used as components for deriving the write and read clocks from the system clock, which circuit arrangement (FV) comprises a delay line (VZ), to which the system clock (CKC) is supplied as an input variable, and at each of whose outputs a plurality of clock signals, which are offset in time by a fixed group pattern, can be picked off, as well as comprising a programmable logic array (PAL) to which these clock signals are supplied and whose two outputs supply the write clock signals (WRSM) and the read clock signals (RDSM).

## Revendications

1. Central téléphonique numérique à multiplexage temporel, à commande centrale, comprenant un champ de couplage central (SN), un processeur de coordination central servant, entre autres, à la commande de ce champ, ainsi qu'un certain nombre de groupes de raccordement décentralisés (LTG) servant au raccordement de lignes de communication et/ou de raccordement d'abonnés, qui présentent chacun un dispositif de commande décentralisé (GP) correspondant au processeur de coordination, ainsi qu'un champ de couplage de groupe (GS) travaillant en étage temporel, les groupes de raccordement étant associés l'un à l'autre par paires de telle manière qu'à la différence d'un service normal, dans lequel il ne se réalise par chaque groupe de raccordement que le trafic téléphonique propre qui est en relation avec les lignes de communication et/ou d'abonnés qui sont raccordées à ce groupe, dans un service spécial, la commande décentralisée (GP) et le champ de couplage de groupes (GS) sont utilisés conjointement pour la réalisation du trafic téléphonique partenaire qui est en relation avec les lignes de communication et/ou de raccordement d'abonnés raccordées au groupe de raccordement partenaire concerné, ce pourquoi la mémoire d'étage temporel du champ de couplage de groupes (GS) est calculée pour le double du nombre des raccordements de lignes,
caractérisé en ce que
dans les champs de couplage de groupe, une mémoire intermédiaire de partie propre pour les informations de télécommunication provenant des lignes de communication et/ou de raccordement d'abonnés (VL) raccordées au groupe de raccordement propre et une mémoire intermédiaire de partie partenaire pour les informations téléphoniques provenant de lignes (VL) raccordées au groupe de raccordement partenaire forment un unique module (RAM) qui est relié, pour son pilotage en écriture et lecture, aux parties constitutives du champ de couplage de groupe qui servent à dériver, d'un rythme d'horloge de système (CKC) dont la fréquence suffirait pour le traitement du seul trafic téléphonique propre, un rythme d'horloge d'une fréquence doublée dans lequel des paires d'impulsions de rythme d'horloge provoquent alternativement le pilotage en écriture et en lecture de la mémoire intermédiaire de partie propre resp. de la mémoire intermédiaire de partie partenaire.

2. Central téléphonique selon la revendication 1,
caractérisé
en ce qu'on utilise comme éléments constitutifs pour dériver des rythmes d'horloge d'écriture et de lecture à partir du rythme d'horloge de système, un montage (FV) qui est composé d'une ligne à retard (VZ), à laquelle le rythme d'horloge de système (CKC) est transmis en tant que grandeur d'entrée et sur les sorties de laquelle on peut prendre plusieurs signaux de rythme d'horloge qui sont décalés dans le temps de la valeur d'une trame fixe, ainsi que d'un champ logique programmable (PAL) auquel ces signaux de rythme d'horloge sont transmis et dont les deux sorties fournissent respectivement les signaux de rythme d'horloge d'écriture (WRSM) et les signaux de rythme d'horloge de lecture (RDSM).
